# DEMANDE DE BREVET EUROPEEN

(11) **EP 0 785 403 A1**
(43) Date de publication de la demande: **23.07.1997**
(21) Numéro de dépôt: 97200121.8
(22) Date de dépôt: 15.01.1997
(51) Int. Cl.: F28D 1/02, F28D 1/053, F24D 3/16

(54) **Radiateur et procédé pour sa réalisation**

(30) Priorité: 19.01.1996 BE 9600047
(71) Demandeur: Hafra, naamloze vennootschap, 3512 Stevoort (BE)
(72) Inventeur: Hahn, Frank, 3440 Zoutleeuw (BE)
(74) Mandataire: Donné, Eddy

(57) **Abrégé**

Radiateur, caractérisé en ce qu'il présente une enveloppe (2) qui est constituée principalement d'un produit (4) lié au moyen d'une résine (3) ou d'une matière synthétique durcissable de type analogue.

## Description

La présente invention concerne un radiateur et un procédé pour sa réalisation.

L'invention a pour objet d'offrir un radiateur qui, contrairement aux radiateurs classiques qui sont constitués entièrement de fonte ou d'acier en tôle, peut être réalisé facilement dans des formes et dans des couleurs différentes, éventuellement en fonction du milieu ambiant.

L'invention a également pour objet un radiateur qui, conformément à une forme de réalisation préférée, présente une surface très lisse, sans soudure. En l'occurrence, l'intention est de disposer d'un radiateur qui peut être nettoyé facilement, rapidement et en profondeur de telle sorte qu'un radiateur de ce type est particulièrement approprié, du point de vue hygiénique, par exemple pour des salles de bains, des toilettes, des hôpitaux, etc.

L'invention envisage également un radiateur qui ne doit plus être peint.

En outre, l'invention a également pour objet un radiateur dans lequel, selon une forme de réalisation particulière, on peut mettre en oeuvre des produits de recyclage tels que par exemple le verre.

A cet effet, l'invention est constituée d'un radiateur ayant pour caractéristique qu'il présente une enveloppe qui est constituée principalement d'un produit lié au moyen d'une résine ou d'une matière synthétique durcissable de type analogue. Ce produit qui, en dernière analyse, est un produit de remplissage et/ou de garnissage, est constitué de préférence par un produit de granulation, tandis que l'on utilise une résine synthétique pour la résine.

De préférence, le produit de granulation est choisi parmi la série comprenant: du quartz, du verre, du carbonate de calcium et du sulfate de baryum. Bien entendu, d'autres matériaux sont également envisageables. Dans le cas du verre, il est bien entendu que l'on peut utiliser sans problème du verre recyclé, de telle sorte que l'invention contribue également à une solution apportée à la problématique de l'environnement en ce qui concerne les matières de déchets.

Pour la résine, on utilise de préférence une résine de polyester qui fournit de très bons résultats en ce qui concerne le lissé et les possibilités de fabrication. Néanmoins, il est clair que l'on peut également utiliser d'autres résines telles que par exemple une résine époxy, une résine de polyuréthanne et analogues.

De préférence, la quantité de résine en volume, par rapport à la quantité totale en volume des constituants, s'élève au maximum à 20% et mieux encore au maximum à 15%. Ainsi, on limite le prix coûtant. De même, on évite par là l'apparition d'un retrait considérable, ce qui est important pour exclure la présence de cassures, de fissures et analogues.

Dans la forme de réalisation de loin préférée, le radiateur est composé d'un radiateur tubulaire, l'enveloppe précitée étant appliquée autour de ce radiateur tubulaire ou contre ce radiateur tubulaire. Cette forme de réalisation a pour avantage que l'enveloppe n'est soumise à aucune exigence en ce qui concerne l'étanchéité à l'eau, étant donné que cette dernière est assurée par le radiateur tubulaire. En outre, de cette manière, on peut partir d'un radiateur tubulaire existant autour duquel on monte le radiateur selon l'invention.

Plus spécifiquement, il est préférable de réaliser l'enveloppe sous forme d'une pièce moulée, le radiateur tubulaire étant scellé dans cette pièce moulée. De cette manière, grâce au contact intime entre l'enveloppe et les tubes, on obtient, lorsqu'on utilise les radiateurs, un transfert de chaleur optimal des tubes en direction de l'enveloppe.

Dans l'enveloppe, on peut pratiquer des passages pour l'air qui s'étendent de préférence en hauteur, par exemple en direction verticale. Ces derniers offrent l'avantage que l'on obtient un meilleur transfert de chaleur en direction de l'air ambiant.

L'invention concerne également un procédé pour la mise en oeuvre d'un radiateur de ce type, qui est constitué principalement par les étapes successives consistant à: réaliser un radiateur tubulaire et/ou à plaques; préparer un moule constitué principalement par deux éléments de moule, respectivement un premier élément de moule qui détermine la forme d'au moins le côté frontal de l'enveloppe précitée, et un second élément de moule qui détermine au moins la forme d'au moins une partie du côté dorsal; abaisser le premier élément de moule; amener le radiateur tubulaire et/ou à plaques dans cet élément de moule et le soutenir à distance de ce dernier; positionner le deuxième élément de moule par-dessus le radiateur tubulaire et/ou à plaques, à distance de ce dernier; remplir le moule avec un mélange de résine liquide et d'un produit de remplissage, respectivement de garnissage; laisser durcir la résine; et retirer du moule le produit final obtenu.

Dans le but de mieux mettre en évidence les caractéristiques selon l'invention, on décrit ci-après, à titre d'exemple, sans aucun caractère limitatif, un certain nombre de réalisations préférées en se référant aux dessins annexés dans lesquels:
la figure 1 est une vue en perspective d'un radiateur selon l'invention;
la figure 2 représente, à une plus grande échelle, une coupe prise le long de la ligne II-II en figure 1; la figure 3 représente le radiateur tubulaire qui est utilisé dans le radiateur de la figure 1;
la figure 4 représente le profilé de fixation qui est indiqué en figure 1 par la flèche F4;
la figure 5 représente, à une plus petite échelle et en coupe transversale, un moule dans lequel on peut réaliser un radiateur tel que représenté en figure 1; les figures 6, 7 et 8 représentent une série de variantes d'un radiateur selon l'invention, dans une vue en plan;
les figures 9 et 10 représentent, en coupe, encore deux radiateurs selon l'invention.

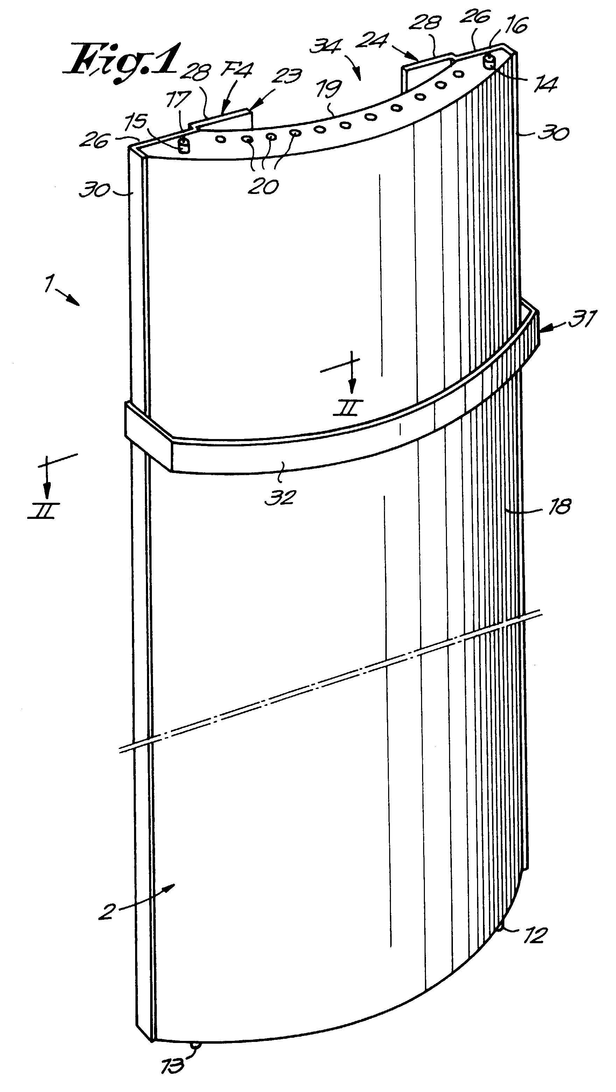

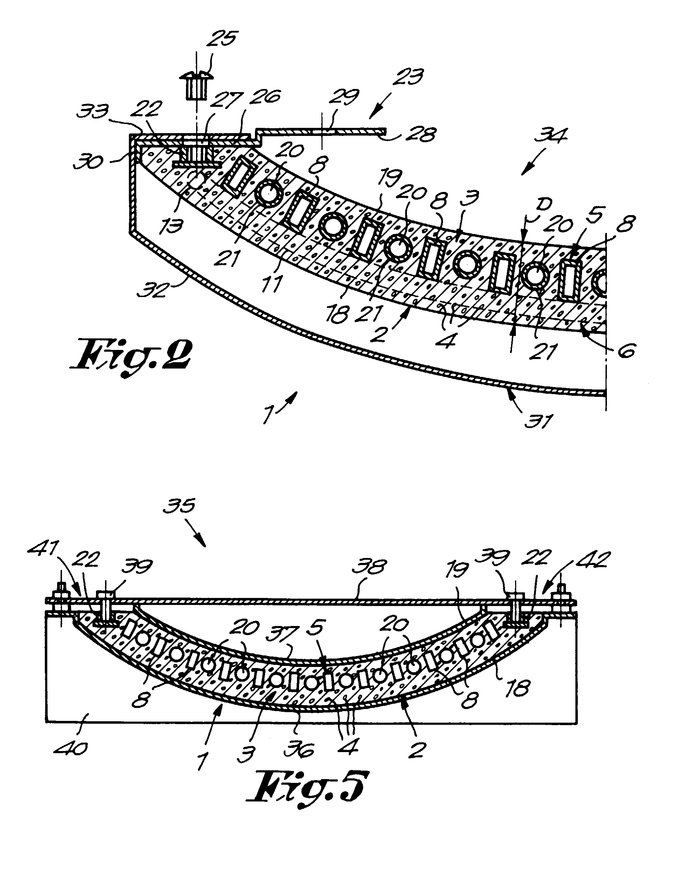

Comme représenté dans les figures 1 et 2, un radiateur 1 selon l'invention présente une enveloppe 2 qui est constituée principalement par un produit 4 lié par une résine 3, cette résine 3 et le produit 4 étant constitués par des matériaux tels que décrits dans l'introduction ci-dessus.

L'enveloppe 2, qui est constituée de préférence par un bloc massif muni de parois lisses, peut prendre différentes formes. Dans l'exemple, on représente une forme cintrée qui offre l'avantage de diffuser la chaleur de rayonnement au cours de l'utilisation, uniformément sur un grand angle.

L'enveloppe 2 est appliquée autour d'un radiateur tubulaire 5 qui peut en soi également présenter différentes formes, mais dont la forme de réalisation de loin préférée est représentée en figure 3.

Le radiateur tubulaire 5 est composé d'un collecteur inférieur 6, d'un collecteur supérieur 7 et de tubes 8 s'étendant entre eux. Le collecteur inférieur 6 est subdivisé en deux compartiments 10 et 11 au moyen d'une séparation 9 montée au milieu.

Aux quatre extrémités des collecteurs 6-7, on prévoit des raccords, respectivement 12-13-14-15; en l'occurrence, l'intention première est que le raccord 12 fait office d'entrée, que le raccord 13 fait office de sortie et que les raccords 14 et 15 forment des ouvertures de purge d'air qui peuvent être munies de petits clapets de purge d'air 16-17.

Le radiateur tubulaire 5 peut, comme représenté dans les figures 2 et 3, être réalisé à partir de tubes 8 et éventuellement également de collecteurs 6-7 dont la section transversale est carrée. Les tubes 8 sont positionnés de telle sorte que deux de leurs côtés opposés sont situés principalement en position parallèle avec le côté frontal 18, respectivement le côté dorsal 19 de l'enveloppe 2. Ainsi, on obtient le fait que, contrairement à l'utilisation de tubes ronds, on peut réduire à un minimum la distance moyenne qui sépare ces tubes 8 de la paroi externe 18 et/ou 19 et on peut limiter les pertes de chaleur dans l'enveloppe 2.

Pour ces mêmes raisons, il est préférable de limiter l'épaisseur D du radiateur 1 à 50, et mieux encore à 45 mm, bien que ceci ne soit absolument pas nécessaire.

De préférence, les collecteurs 6-7 et les tubes 8-9 sont constitués de métal, plus spécifiquement de cuivre ou d'aluminium.

En outre, de préférence, le radiateur 1 est également muni de passages pour l'air 20 en vue de faciliter le transfert de chaleur des tubes 9 en direction du milieu ambiant, comme on l'a déjà indiqué. Dans la forme de réalisation représentée, ces passages pour l'air 20 sont constitués par des canaux s'étendant en hauteur de telle sorte que, dans ces derniers, lors de l'utilisation, un courant d'air peut s'établir automatiquement grâce à l'ascension de l'air qui y est présent et qui est chauffé.

Dans le cas où l'on prévoit des passages pour l'air 20 de ce type, le radiateur tubulaire 5, comme représenté en figure 3, sera muni de préférence de collecteurs 6-7 qui sont appliqués latéralement contre les tubes 8 et les passages pour l'air 20 sont réalisés entre les tubes 8. De cette manière, on réduit la distance séparant les tubes 8, et les passages pour l'air 20, et les collecteurs 6-7 ne constituent pas une gêne pour les passages pour l'air 20.

Dans l'exemple de la figure 3, les collecteurs 6-7 sont disposés sur le côté frontal. Conformément à une variante, ils peuvent être situés contre le côté dorsal, si bien que l'on peut sélectionner un espace inférieur entre les tubes 8 et le côté frontal 18 de l'enveloppe 2 dans le but d'obtenir un meilleur transfert de chaleur.

De préférence, l'enveloppe 2 est réalisée sous forme d'une pièce moulée dans laquelle le radiateur tubulaire 5 est scellé, bien entendu de telle sorte que les raccords 12-13-14-15 font saillie par rapport à l'enveloppe 2, tandis que le radiateur tubulaire 5 reste par ailleurs complètement encapsulé dans l'enveloppe 2.

De préférence, les passages pour l'air 20 sont formés au moyen de petits tubes scellés 21. Il va de soi néanmoins que ces passages pour l'air 20 peuvent également être réalisés grâce à des ouvertures pratiquées dans l'enveloppe 2 en l'absence des petits tubes précités 21 ou analogues.

Pour pouvoir fixer le radiateur 1 à un mur ou analogues, celui-ci est muni comme, représenté en figure 2, de préférence d'éléments de fixation scellés 22 avec lesquels il peut être fixé directement ou indirectement au mur concerné.

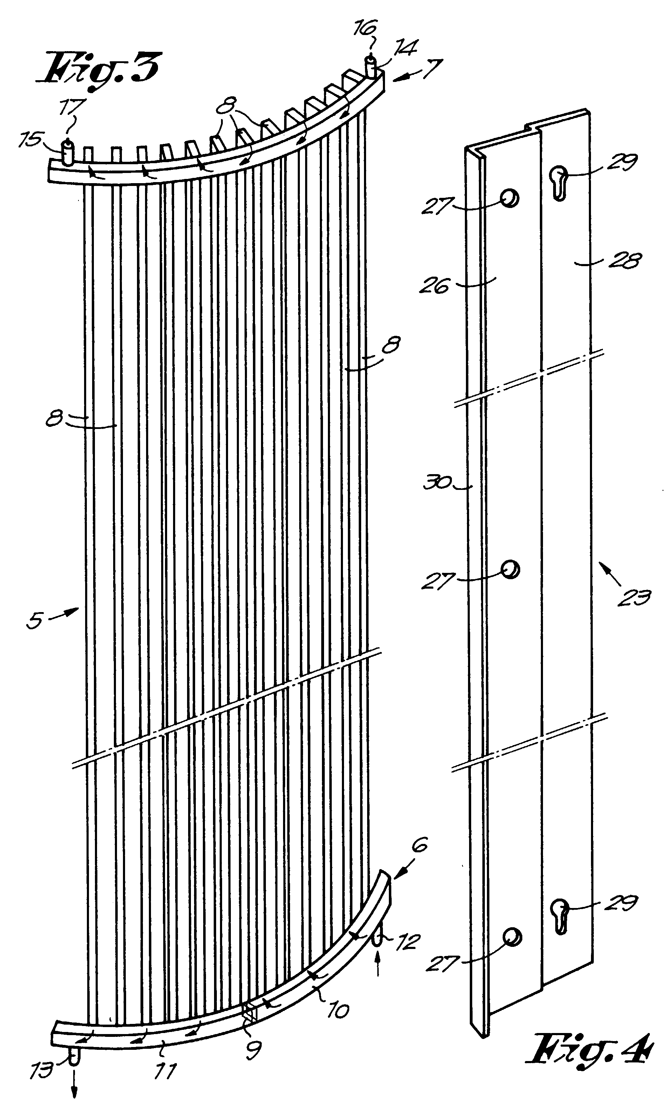

Comme représenté dans les figures 1, 2 et 4, on peut mettre en oeuvre une fixation efficace en utilisant les deux profilés de fixation 23-24 qui sont montés à gauche et à droite contre le côté dorsal de l'enveloppe 2, plus spécifiquement à l'aide de boulons ou de vis 25 qui peuvent être vissés dans les éléments de fixation 22.

De préférence, les profilés de fixation 23-24 sont des profilés à parois minces. A cet effet, ils peuvent être constitués par des plaques en inox. Ils sont cintrés en formant un gradin en coupe transversale et ils sont constitués par une première bride 26 qui est destinée à venir se raccorder au côté dorsal de l'enveloppe 2 et qui est munie d'ouvertures 27 pour les vis 25, et par une seconde bride 28 qui est parallèle à la première bride 26 tout en étant décalée vers l'arrière et vers l'intérieur par rapport à cette dernière, et qui est munie d'ouvertures 29, de préférence d'ouvertures en forme de trou de serrure pour pouvoir suspendre le radiateur 1 à un mur.

De préférence, la première bride 26 présente un bord cintré 30 qui vient se raccorder au côté latéral concerné du radiateur 1.

On peut fixer des accessoires au radiateur 1. La suspension du radiateur 1 décrite ci-dessus permet, sans complication, de pouvoir fixer des accessoires de ce type de manière conjointe au moyen des vis précitées 25. Dans une forme de réalisation pratique et comme représenté dans les figures 1 et 2, le radiateur 1 sera muni d'un support pour essuie-mains 31 qui peut être constitué par un étrier 32 qui s'étend en position parallèle le long du côté frontal 18 et qui est muni d'extrémités 33 repliées vers l'intérieur qui permettent de le fixer contre le côté dorsal de l'enveloppe 2.

Il est clair que le radiateur 1 et plus spécifiquement l'enveloppe 2 peuvent être mis en oeuvre dans différentes formes et qu'ils ne doivent pas être nécessairement cintrés comme c'est le cas en figure 1. Néanmoins, il est préférable de ménager, contre le côté dorsal, un espace creux 34 s'étendant en hauteur, qui garantit un meilleur transfert de chaleur étant donné qu'un courant d'air chaud ascendant est généré dans le canal qui est alors circonscrit par le côté dorsal 19 et par le mur contre lequel sera fixé le radiateur 1.

L'utilisation du radiateur 1 correspond principalement à celle d'un radiateur classique. Après avoir raccordé le radiateur via les raccords 12 et 13 à un conduit d'alimentation pour l'eau chaude et à un conduit d'évacuation, l'eau chaude circule à travers le radiateur tubulaire 5. Ainsi, on obtient un dégagement de chaleur, d'une part par rayonnement du fait que l'enveloppe 2 se réchauffe, et d'autre part par convection provenant du réchauffement du courant d'air qui s'élève le long des côtés 18-19 et à travers les passages pour l'air 20.

Pour la fabrication, on fait usage de préférence d'un moule 35 qui est constitué principalement par deux éléments de moule 36-37, comme représenté en coupe transversale en figure 5.

Par conséquent, le procédé qui suit est constitué par le fait de: réaliser un radiateur tubulaire 5; préparer un moule 35 qui, comme on l'a dit ci-dessus, est constitué par deux éléments de moule, respectivement un premier élément de moule 36 qui détermine la forme d'au moins le côté frontal 18 de l'enveloppe 2, et un second élément de moule 35 qui détermine au moins la forme d'au moins une partie du côté dorsal 19; abaisser le premier élément de moule 36; appliquer le radiateur tubulaire 5 dans cet élément de moule 36 et le supporter à distance de ce dernier; positionner le second élément de moule 36 par-dessus le radiateur tubulaire 5, à distance de ce dernier; remplir le moule 35 à l'aide d'un mélange d'une résine liquide et d'un produit de remplissage, respectivement de garnissage; laisser durcir la résine; et récupérer du moule 35 le produit final obtenu.

Comme représenté en figure 5, le positionnement du second élément de moule 35 peut être réalisé à l'aide de profilés 38 auxquels est fixé le second élément de moule 37, les profilés 38 s'appuyant sur le premier élément de moule 36. Ces profilés 38 permettent également de positionner des éléments de fixation 22 dans le moule 35, par exemple à l'aide de boulons 39 qui seront éliminés par la suite.

Le radiateur tubulaire 5 peut être supporté, au cours de son moulage, en le fixant à l'aide des raccords 12-13-14-15 dans des panneaux latéraux 40 du moule 35.

De préférence, le second élément de moule 37 est plus étroit que le premier élément de moule 36, si bien que l'on obtient de part et d'autre des ouvertures de remplissage relativement grandes, respectivement 41 et 42.

L'utilisation d'un élément de moule large 36 et d'un élément de moule étroit 37, de la manière telle que représentée en figure 5, a également pour avantage de faire en sorte que seule une surface limitée de l'enveloppe obtenue 2 est plus ou moins rugueuse, étant donné que la majeure partie de la surface de l'enveloppe 2 se trouve en contact avec la paroi du moule 35 et est par conséquent très lisse.

Ces parties plus ou moins rugueuses de la surface peuvent être recouvertes de manière simple en utilisant les profilés de fixation précités 23-24, la bride 26 formant alors un recouvrement de ces derniers.

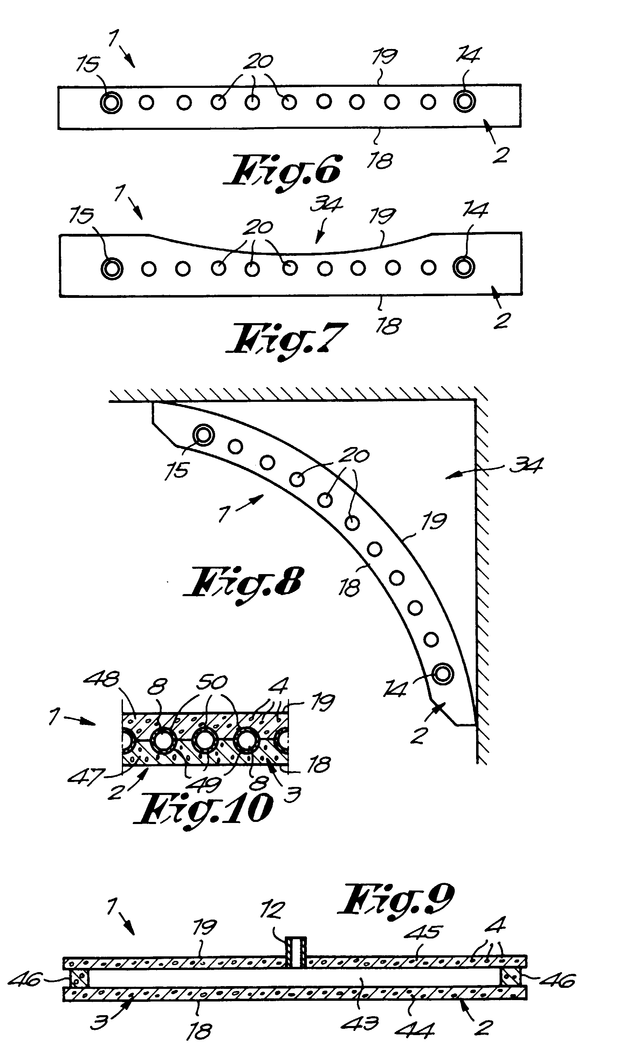

Dans les figures 6 à 8, on représente le fait que l'enveloppe 2 peut être réalisée dans des formes différentes.

Même si, comme on l'a déjà mentionné ci-dessus, on part de préférence d'un radiateur tubulaire 5 qui est scellé dans l'enveloppe 2, ceci ne constitue pas une exigence stricte selon l'invention.

Dans l'enveloppe 2, on pourrait prévoir par exemple une ou plusieurs cavités moulées qui permettent à l'eau d'y circuler, sans devoir utiliser un radiateur tubulaire ou analogues.

Comme représenté en figure 9, l'enveloppe 2 peut également être composée de différents éléments qui sont respectivement réalisés à base d'une résine synthétique et qui sont combinés et que l'on fait adhérer l'un à l'autre de telle sorte que l'on forme entre eux un espace 43 pour la circulation de l'eau. Dans la forme de réalisation de la figure 9, on utilise à cet effet une plaque frontale 44, une plaque dorsale 45 et des écarteurs sous la forme de bandes 46 appliqués entre eux le long de la périphérie.

En figure 10, on représente encore une variante par laquelle l'enveloppe 2 est composée d'éléments 47-48 formés séparément au préalable, que l'on fixe contre les tubes 8. A cet effet, ils sont munis de préférence d'évidements 49-50 qui permettent de raccorder ces éléments 46-47 en ajustage serré autour des tubes 8.

Il convient de mentionner que le radiateur selon l'invention peut également être composé d'un élément de radiateur tel que par exemple le radiateur tubulaire 5 et d'une enveloppe 2 qui entoure seulement partiellement l'élément de radiateur. Ainsi, on pourrait par exemple se passer, dans la forme de réalisation selon la figure 10, de la plaque dorsale 48.

L'élément de radiateur présent dans l'enveloppe 2 ne doit pas nécessairement être un radiateur tubulaire et il peut être constitué par exemple d'un radiateur à plaques. Le procédé pour la mise en oeuvre est analogue.

L'invention a principalement pour objet des radiateurs 1 qui doivent être suspendus à un mur ou analogues ou qui doivent être dressés librement dans un espace. Conformément à une forme de réalisation importante, l'enveloppe 2 est réalisée sous la forme d'une colonne qui permet un emplacement central dans un espace à réchauffer, sans que l'on soit fortement gêné par la présence du radiateur 1.

Il n'est pas non plus exclus de réaliser le radiateur dans d'autres formes, par exemple sous forme d'un élément de construction à encastrer dans un mur, dans un plancher ou dans un plafond, ou encore sous forme d'un article d'usage courant; on pense par exemple à une banquette chauffée.

La présente invention n'est en aucune façon limitée aux formes de réalisation décrites à titre d'exemple et représentées dans les figures; un radiateur de ce type et un procédé pour sa réalisation peuvent être mis en oeuvre dans différents variantes sans sortir du cadre de l'invention. Les différentes caractéristiques des formes de réalisation décrites à l'aide des dessins peuvent être ou non combinées l'une à l'autre.

## Revendications

1. Radiateur caractérisé en ce qu'il présente une enveloppe (2) qui est constituée principalement d'un produit (4) lié au moyen d'une résine (3) ou d'une matière synthétique durcissable de type analogue.

2. Radiateur selon la revendication 1, caractérisé en ce que le produit est constitué principalement d'un produit de granulation.

3. Radiateur selon la revendication 2, caractérisé en ce que le produit de granulation est choisi parmi la série comprenant le quartz, le verre, le carbonate de calcium, le sulfate de baryum, des produits de recyclage granulés.

4. Radiateur selon l'une quelconque des revendications précédentes, caractérisé en ce que la résine (3) est une résine synthétique choisie parmi la série comprenant: une résine de polyester, une résine époxy, une résine de polyuréthanne.

5. Radiateur selon l'une quelconque des revendications précédentes, caractérisé en ce que la composition qui forme l'enveloppe (2) comprend au maximum 20% et mieux encore au maximum 15% de résine (3).

6. Radiateur selon l'une quelconque des revendications précédentes, caractérisé en ce que l'enveloppe (2) est munie de passages pour l'air (20) qui s'étendent principalement en hauteur.

7. Radiateur selon l'une quelconque des revendications précédentes, caractérisé en ce qu'il représente un radiateur tubulaire et/ou à plaques (5), autour duquel ou contre lequel est appliquée l'enveloppe (2).

8. Radiateur selon les revendications 6 et 7, caractérisé en ce qu'il comprend un radiateur tubulaire (5) qui est constitué par des collecteurs (6-7) et par des tubes (8) s'étendant entre ces derniers, les collecteurs (6-7) étant décalés latéralement par rapport aux tubes (8) et les passages pour l'air (20) étant disposés entre les tubes (8).

9. Radiateur selon la revendication 7 ou 8, caractérisé en ce que les tubes (8) du radiateur tubulaire (5) présentent une section transversale carrée par laquelle respectivement deux côtés opposés des buses (8) sont situés en position principalement parallèle contre les côtés externes adjacents (18-19) de l'enveloppe (2).

10. Radiateur selon l'une quelconque des revendications précédentes, caractérisé en ce que l'enveloppe (2) est constituée d'un élément moulé.

11. Radiateur selon la revendication 10 et selon l'une quelconque des revendications 7, 8 ou 9, caractérisé en ce que le radiateur tubulaire et/ou à plaques (5) est scellé dans l'enveloppe (2).

12. Radiateur selon la revendication 6 et selon l'une quelconque des revendications 10 ou 11, caractérisé en ce que les passages pour l'air (20) sont constitués par des petits tubes scellés (21).

13. Radiateur selon l'une quelconque des revendications précédentes, caractérisé en ce qu'il présente une épaisseur maximale (D) de 50 mm et mieux encore une épaisseur maximale de 45 mm.

14. Radiateur selon l'une quelconque des revendications précédentes, caractérisé en ce qu'il est réalisé sous forme d'un élément de construction et en ce que l'enveloppe (2) est cintrée.

15. Radiateur selon l'une quelconque des revendications précédentes, caractérisé en ce qu'il est muni d'éléments de fixation (22) scellés dans l'enveloppe (2).

16. Radiateur selon la revendication 15, caractérisé en ce qu'il présente deux côtés latéraux verticaux; en ce qu'il est muni, de part et d'autre, de profilés de fixation (23-24) à parois minces; et en ce que chacun de ces profilés (23-24) est cintré en formant un gradin et est constitué par une première bride (26) qui se raccorde contre le côté dorsal de l'enveloppe (2) et qui est munie d'ouvertures (27) à travers lesquelles elle peut être fixée aux éléments de fixation précités (22), par une seconde bride (28) qui est parallèle à la première bride (26), mais qui est décalée vers l'arrière et vers l'intérieur par rapport à cette dernière, et qui est munie d'ouvertures (29) pour pouvoir suspendre le radiateur (1) à un mur, ainsi que par un bord cintré (30) se raccordant à la première bride (26), qui se raccorde au côté latéral concerné du radiateur (1).

17. Procédé pour la mise en oeuvre d'un radiateur selon l'une quelconque des revendications 7 à 16, caractérisé en ce qu'il est constitué par les étapes successives consistant à: réaliser un radiateur tubulaire et/ou à plaques (5); préparer un moule (35) constitué principalement par deux éléments de moule, respectivement un premier élément de moule (36) qui détermine la forme d'au moins le côté frontal (18) de l'enveloppe précitée (2) et un second élément de moule (37) qui détermine au moins la forme d'au moins une partie du côté dorsal (19); abaisser le premier élément de moule (36); amener le radiateur tubulaire et/ou à plaques (5) dans cet élément de moule (36) et le soutenir à distance de ce dernier; positionner le deuxième élément de moule (37) par-dessus le radiateur tubulaire et/ou à plaques (5), à distance de ce dernier; remplir le moule (35) avec un mélange de résine liquide et un produit de remplissage, respectivement de garnissage; laisser durcir la résine; et retirer du moule (35) le produit final obtenu.

18. Procédé selon la revendication 17, caractérisé en ce que le second élément de moule (37) est plus étroit que le premier élément de moule (36) et en ce que le moule (35) est rempli via les ouvertures de remplissage (41, 42) ainsi présentes de part et d'autre du second élément de moule (37).
